(19) Europäisches Patentamt / European Patent Office / Office européen des brevets

(11) **EP 3 376 252 B1**

(12) **EUROPEAN PATENT SPECIFICATION**

(45) Date of publication and mention
of the grant of the patent:
**11.10.2023 Bulletin 2023/41**

(21) Application number: **18159002.7**

(22) Date of filing: **27.02.2018**

(51) International Patent Classification (IPC):
*G01S 7/03* (2006.01)   *H01Q 25/00* (2006.01)
*H01Q 21/22* (2006.01)   *H01Q 21/08* (2006.01)
*G01S 13/931* (2020.01)   *G01S 13/87* (2006.01)
*G01S 13/42* (2006.01)   *H01Q 1/32* (2006.01)

(52) Cooperative Patent Classification (CPC):
**G01S 7/03; G01S 13/42; G01S 13/878;
G01S 13/931; H01Q 1/3233; H01Q 21/08;
H01Q 21/22; H01Q 25/00**

(54) **DETECTOR DEVICE INCLUDING A SHIFTED MULTI-DIMENSIONAL ARRAY OF DETECTOR ELEMENTS**

DETEKTORVORRICHTUNG MIT EINEM VERSCHOBENEN MEHRDIMENSIONALEN ARRAY VON DETEKTORELEMENTEN

DISPOSITIF DÉTECTEUR COMPRENANT UN RÉSEAU MULTIDIMENSIONNEL DÉCALÉ D'ÉLÉMENTS DÉTECTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2017 US 201762470942 P
18.09.2017 US 201715706882**

(43) Date of publication of application:
**19.09.2018 Bulletin 2018/38**

(73) Proprietor: **Aptiv Technologies Limited
St. Michael (BB)**

(72) Inventors:
• **ALCALDE, Carlos
  Beverly Hills, CA 90210 (US)**
• **LI, Zhengzheng
  Agoura Hills, CA 91301 (US)**

(74) Representative: **Manitz Finsterwald
Patent- und Rechtsanwaltspartnerschaft mbB
Postfach 31 02 20
80102 München (DE)**

(56) References cited:
**WO-A1-2013/053467     US-A1- 2016 104 946
US-A1- 2017 187 102**

**Description**

**BACKGROUND**

Innovations in electronics and technology have made it possible to incorporate a variety of advanced features on automotive vehicles. Various sensing technologies have been developed for detecting objects or monitoring the surroundings in a vicinity or pathway of a vehicle. Such systems are useful for parking assist, lane departure detection and cruise control adjustment features, for example.

U.S. Patent Publication No. 2016/0104946 A1 ("Radar Apparatus") describes a radar apparatus including a first antenna and a second antenna. The first antenna includes a plurality of first antenna elements that are arrayed in a first direction on a surface oriented to a forward direction, as antenna elements configuring the first antenna. The second antenna includes a plurality of second antenna elements that are arrayed in a second direction perpendicular to the first direction on the surface oriented to a forward direction, as antenna elements configuring the second antenna. The radar apparatus emits radar waves in a forward direction using either of the first and second antennas, and receives reflected waves of the radar waves using the other of the first and second antennas.

International Patent Publication No. 2013/053467 A1 ("Radar System for a Road Vehicle with Improved Calibrating Possibilities") relates to a radar system and to a method for an improved calibration of a radar system. The invention proposes a radar system for detecting the surroundings of a road vehicle, comprising a transmitting antenna arrangement for transmitting radar radiation, a receiving antenna arrangement for receiving the radar radiation that is reflected on objects in the surroundings of the road vehicle, and an analyzing device. The receiving antenna arrangement and the transmitting antenna arrangement each have multiple (at least two) antenna sections, wherein each antenna section has a longitudinal direction along which the antenna section extends farther than transverse to the longitudinal direction. A number of the antenna sections are arranged parallel to one another and at a distance to one another transverse to the respective longitudinal direction in each of the antenna arrangements. The analyzing device is designed to ascertain an azimuth angle on an azimuth measuring plane using the received reflected radar radiation for the objects reflecting the respective radar radiation, said azimuth measuring plane being oriented perpendicularly to the longitudinal directions of the number of antenna sections. At least one of the multiple antenna sections is offset relative to at least one other of the antenna sections with respect to the longitudinal direction of the at least one other antenna section in the transmitting antenna arrangement and/or in the receiving antenna arrangement, and the analyzing device is additionally designed to determine an elevation angle for the object reflecting the respective radar radiation, said elevation angle being determined perpendicularly to the azimuth measuring plane.

More recently, automated vehicle features have become possible to allow for autonomous or semi-autonomous vehicle control. Sensors for such systems may incorporate LIDAR (light detection and ranging) or radar for detecting an object or another vehicle in the pathway of or otherwise near the vehicle. Depending on the approach speed, the cruise control setting may be automatically adjusted to reduce the speed of the vehicle based on detecting another vehicle in the pathway of the vehicle, for example.

One aspect of such sensing technologies includes determining an angle associated with the detection for properly identifying the position of an object external to the vehicle. With known RADAR systems, angle resolution depends on the spacing between the detector elements and the overall antenna or receiver aperture. Automotive sensing devices typically have a small number of transmit and receive channels. These considerations have made the placement of RADAR or LIDAR detector elements critical to achieve a desired level of performance.

There are challenges associated with designing and utilizing such devices on automotive vehicles. While a larger aperture size can yield better angular discrimination, it does not come without a cost. Increasing the aperture size tends to introduce grating lobes in the spectrum especially when the array spacing is greater than one-half a wavelength as demonstrated by the Nyqist-Shannon sampling theorem. Typical radar detector design includes placing the detector elements in an array with a one-half wavelength spacing between them to avoid grating lobes.

Those skilled in the art are striving to improve various aspects of detectors useful on vehicles.

**SUMMARY**

In one aspect, the present disclosure is directed at a detector device according to claim 1, including a multiple-dimensional array of detectors including a plurality of first detectors aligned with each other in a first direction and a plurality of second detectors aligned with each other in the first direction. The second detectors are offset relative to the first detectors in a second direction that is different than the first direction. A processor determines an interpolation that compensates for the offset by at least: defining a linear relationship that assumes the plurality of first detectors are aligned with the plurality of second detectors; determining a different relationship between an interpolation error and a phase difference associated with the geometric offset between the plurality of first detectors and the plurality of second detectors; determining a value of the phase difference that minimizes the interpolation error; and determining the interpolation coefficient from the linear relationships using the phase difference that minimizes the interpolation error. The processor further determines an angle of detection of the device based on the interpolation coefficient thereby effectively collapsing the multiple-dimensional array to a uniform, linear array.

According to an embodiment having one or more features of the detector device of the previous paragraph, the angle of detection comprises a first angle in a first dimension and a second angle in a second dimension that is transverse with the first dimension.

According to an embodiment having one or more features of the detector device of either of the previous paragraphs, the first angle is an azimuth and the second angle is an elevation.

According to an embodiment having one or more features of the detector device of any of the previous paragraphs, the interpolation coefficient comprises a plurality of coefficients and a correction factor.

According to an embodiment having one or more features of the detector device of any of the previous paragraphs, the first direction is perpendicular to the second direction.

According to an embodiment having one or more features of the detector device of any of the previous paragraphs, the detectors each comprise an antenna.

According to an embodiment having one or more features of the detector device of any of the previous paragraphs, the detectors detect at least one of RADAR or LIDAR radiation.

According to an embodiment having one or more features of the detector device of any of the previous paragraphs, the processor determines the interpolation coefficient based on relating the plurality of first detectors and the plurality of second detectors as if they were in an aligned array structure.

In another aspect, according to independent claim 8, the present disclosure is directed to a method of detecting, the method including defining a linear relationship that assumes a plurality of first detectors are aligned with a plurality of second detectors. The plurality of first detectors and the plurality of second detectors are in a multiple-dimensional array including the plurality of first detectors aligned with each other in a first direction and the plurality of second detectors aligned with each other in the first direction. The offset is between the plurarlity of first detectors and the plurality of second detectors in a second direction that is different than the first direction. The method further includes determining a different relationship between an interpolation error and a phase difference associated with the geometric offset between the plurality of first detectors and the plurality of second detectors; determining a value of the phase difference that minimizes the interpolation error; determining an interpolation coefficient from the linear relationships using the phase difference that minimizes the interpolation error and compensates for the offset; and determining an angle of detection of the device using the determined interpolation coefficient thereby effectively collapsing the multiple-dimensional array to a uniform, linear array.

According to an embodiment having one or more features of the method of the previous paragraph, determining the angle of detection includes determining a first angle in a first dimension and determining a second angle in a second dimension that is transverse with the first dimension.

According to an embodiment having one or more features of the method of either of the previous paragraphs, the first angle is an azimuth and the second angle is an elevation.

According to an embodiment having one or more features of the method of any of the previous paragraphs, determining the interpolation coefficient comprises determining a plurality of coefficients and a correction factor.

According to an embodiment having one or more features of the method of any of the previous paragraphs, the first direction is perpendicular to the second direction.

According to an embodiment having one or more features of the method of any of the previous paragraphs, the detectors each comprise an antenna.

According to an embodiment having one or more features of the method of any of the previous paragraphs, the detectors detect at least one of RADAR or LIDAR radiation.

Various features and advantages of at least one disclosed embodiment will become apparent to those skilled in the art from the following detailed description. The drawings that accompany the detailed description can be briefly described as follows.

## BRIEF DESCRIPTION OF THE DRAWINGS

Figure 1 schematically illustrates a vehicle including detector devices designed according to an embodiment of this invention.

Figure 2 schematically illustrates selected components of an example detector device designed according to an embodiment of this invention.

Figure 3 is a flowchart diagram summarizing an example approach of determining an angle of detection according to an embodiment of this invention.

Figure 4 schematically illustrates selected components of another example detector device designed according to an embodiment of this invention.

## DETAILED DESCRIPTION

Embodiments of this invention include detector devices that provide an ability to measure angles of detection in two dimensions or two directions. Such devices are useful for a variety of vehicle applications, such as detectors on automated vehicles or semi-autonomous vehicles. Such detectors are also useful for assisting drivers of automotive vehicles.

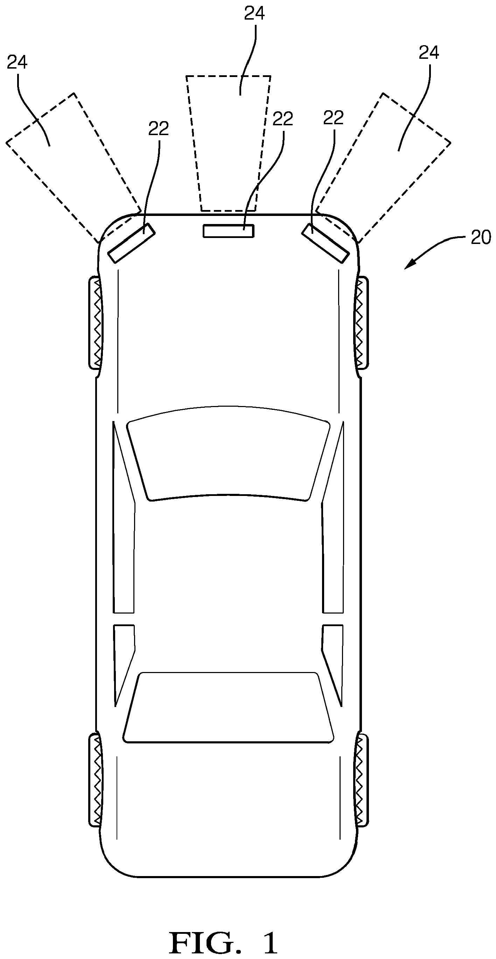

Figure 1 schematically illustrates an example vehicle 20 including a plurality of detector devices 22 that have associated fields of vision 24. In some examples, the detector devices 22 are capable of detecting RADAR radiation while in other examples, the detector devices 22 are capable of detecting LIDAR radiation.

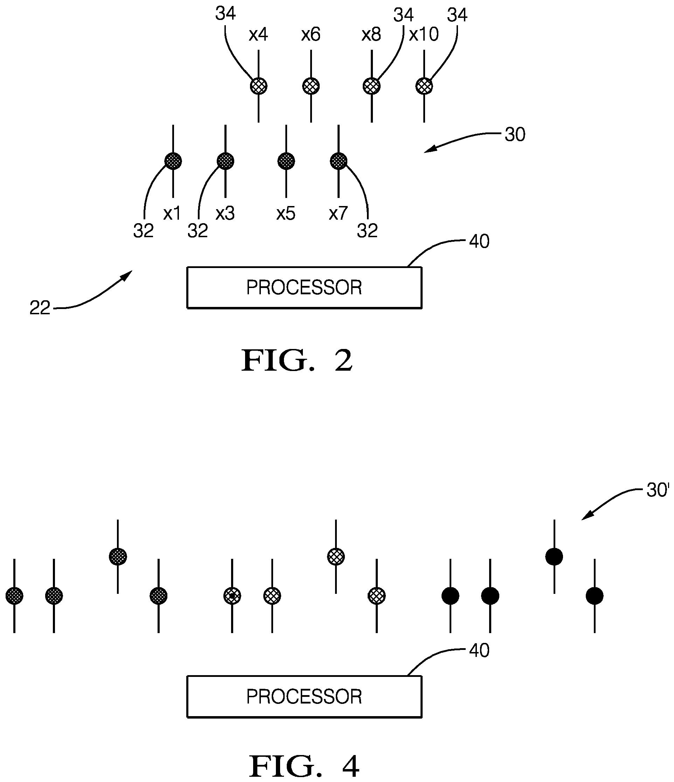

Figure 2 schematically illustrates an example detector device configuration. A two-dimensional array 30 of detectors includes a plurality of first detectors 32 aligned with each other in a first direction (e.g., horizontal according to the drawing). The array 30 includes a plurality of second detectors 34 aligned with each other in the first direction. As can be appreciated from the illustration, the second detectors 34 are offset relative to the first detectors 32 in a second direction (e.g., vertically according to the drawing). The first and second directions are perpendicular in the illustrated example. In an example embodiment, each of the detectors 32 and each of the detectors 34 comprise an antenna.

Given that there is an offset between the first detectors 32 and the second detectors 34 in the second direction, a typical two-dimensional array approach will not provide accurate results when determining an angle of detection of the device 22. The illustrated example includes a processor 40 that is configured or programmed to determine an angle of detection of the device 22 in a manner that accommodates or compensates for the offset between the first detectors 32 and the second detectors 34.

The angle of detection in this example embodiment includes a first angle in a first dimension and a second angle in a second dimension that is transverse to the first dimension. For example, the first angle is an azimuth angle in a horizontal dimension and the second angle is an elevation angle in a vertical dimension

As can be appreciated from Figure 2, the second detector 34 labeled X4 is situated between the first detectors 32 labeled X3 and X5. The processor 40 is configured to determine an interpolation coefficient that is related to the offset between the first detectors 32 and the second detectors 34 and compensates for the shifted position of the second detector 34 labeled X4, for example, between the first detectors 32 labeled X3 and X5.

The shifted array structure provides better measurement in at least one dimension (e.g., horizontal) with a longer array size. At the same time, the illustrated example allows for determining an angle of detection in a second dimension (e.g., vertical) by correcting for the error otherwise introduced by the offset relationship between the detectors.

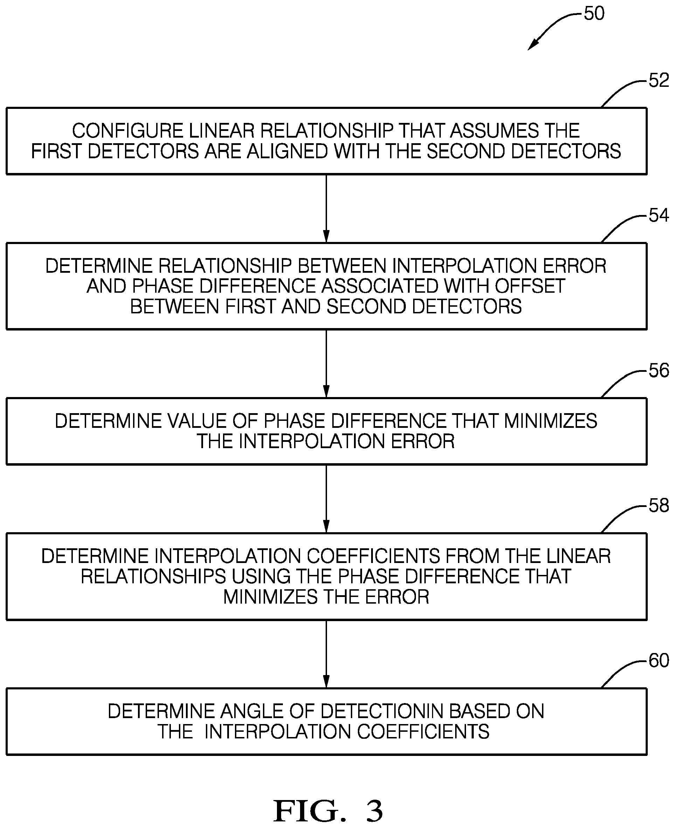

Figure 3 is a flowchart diagram 50 that summarizes an example approach of determining an angle of detection with a shifted array structure such as that included in the example detector device 22 schematically shown in Figure 2. At 52, a linear relationship is configured that assumes the first detectors 32 are aligned with the second detectors 34. At 54, a relationship is determined between an interpolation error, which is introduced by the offset between the second detectors 34 and the first detectors 32, and a phase difference associated with that offset. At 56, a value of the phase difference that minimizes the interpolation error is determined and that phase difference is used for determining the interpolation coefficients from the linear relationship at 58. At 60, the angle of detection is determined based on the interpolation coefficients, which relate the first detectors 32 and second detectors 34 as if they were in an aligned array structure rather than a shifted array structure. In other words, the interpolation coefficients are used to compensate for the offset between the first detectors 32 and the second detectors 34.

A particular implementation of the procedure summarized in Figure 3 includes configuring or developing a linear model that compensates for the offsets between the first detectors 32 and the second detectors 34 and effectively collapses the array to a uniform, linear array. A linear relationship may be expressed using the following equation:

$$\begin{bmatrix} x_4 & x_6 \\ x_3 & x_5 \end{bmatrix} \cdot \begin{bmatrix} \alpha \\ \beta \end{bmatrix} = \begin{bmatrix} x_5 e^{j\theta} \\ x_4 e^{-j\theta} \end{bmatrix} \tag{1}$$

where

$$c = [\alpha, \beta]^T$$

are linear interpolation coefficients and $\theta$ is the phase angle to effectively collapse the array. The phase angle corresponds to the difference in phase associated with the offset between the first detectors 32 and the second detectors 34.

Equation 1 above is true if there are less than two targets because only two coefficients are used in that linear relationship or model. Equation 1 is true based on the assumption that there is only one phase shift between the two transmits, which is good for a single target or two targets at the same elevation relative to the sensor device 22.

Equation 1 can be expanded to include all of the interpolation pairs in the array and the forward-backward array, which would make the solution more robust to noise. Expanding equation 1 in this manner yields

$$\begin{bmatrix} x_4 & x_6 \\ x_6 & x_8 \\ \vdots & \vdots \\ x_3 & x_5 \\ x_5 & x_7 \end{bmatrix} \cdot \begin{bmatrix} \alpha \\ \beta \end{bmatrix} = \begin{bmatrix} x_5 e^{j\theta} \\ x_7 e^{j\theta} \\ \vdots \\ x_4 e^{-j\theta} \\ x_6 e^{-j\theta} \end{bmatrix} \qquad (2)$$

that can be rewritten as

$$\mathrm{Ac} = \mathrm{b}(\theta) = \begin{bmatrix} \mathrm{b}_1 e^{j\theta} \\ \mathrm{b}_2 e^{-j\theta} \end{bmatrix} \qquad (3)$$

Because the interpolation coefficients $\alpha$, $\beta$ and the phase angle $\theta$ are unknown, it is possible to solve for the interpolation coefficients when the phase angle is known.

A least squares solution of the interpolation coefficients c is given by the pseudo-inverse as follows

$$\mathrm{c} = (\mathrm{A}^H \mathrm{A})^{-1} \mathrm{A}^H \mathrm{b}(\theta) \qquad (4)$$

From that equation, the interpolation error expressed in terms of $\theta$ can be represented by the following equation

$$\epsilon^2 = [\mathrm{b}(\theta) - \mathrm{Ac}]^H [\mathrm{b}(\theta) - \mathrm{Ac}] \qquad (5)$$

where

$$\mathrm{b}(\theta) - \mathrm{Ac} = [\mathrm{I} - \mathrm{A}(\mathrm{A}^H \mathrm{A})^{-1} \mathrm{A}^H] \mathrm{b}(\theta) = [\mathrm{I} - \mathrm{P}] \mathrm{b}(\theta) = \mathrm{P}^\perp \mathrm{b}(\theta).$$

Considering P and P$\perp$ as projectors (P=P$_H$ and P·P=P), then Equation 5 can be further written as

$$\epsilon^2 = \mathrm{b}^H(\theta) \mathrm{P}^\perp \mathrm{P}^\perp \mathrm{b}(\theta) = \mathrm{b}^H(\theta) \mathrm{P}^\perp \mathrm{b}(\theta) \qquad (6)$$

The projector P$^1$ may be partitioned as

$$\mathrm{P}^\perp = \begin{bmatrix} \mathrm{P}_1 & \mathrm{P}_2 \\ \mathrm{P}_3 & \mathrm{P}_4 \end{bmatrix}$$

Then Equation 6 can be written as

$$\epsilon^2 = \begin{bmatrix} b_1^H e^{-j\theta} & b_2^H e^{j\theta} \end{bmatrix} \begin{bmatrix} P_1 & P_2 \\ P_3 & P_4 \end{bmatrix} \begin{bmatrix} b_1 e^{j\theta} \\ b_2 e^{-j\theta} \end{bmatrix}$$

$$= b_1^H P_1 b_1 + b_2^H P_3 b_1 e^{j2\theta} + b_1^H P_2 b_2 e^{-j2\theta} + b_2^H P_4 b_2 \qquad (7)$$

$$= \alpha + \beta e^{j2\theta} + \gamma e^{-j2\theta} + \delta$$

Taking the partial derivative of the interpolation error with respect to θ and setting it to 0 yields

$$\frac{\partial \epsilon^2}{\partial \theta} = 2j \cdot e^{j2\theta} b_2^H P_3 b_1 - 2j \cdot e^{-j2\theta} b_1^H P_2 b_2 = 0 \qquad (8)$$

then

$$e^{j4\theta} = \frac{b_1^H P_2 b_2}{b_2^H P_3 b_1} = \frac{\gamma}{\beta} \qquad (9)$$

It follows that $e^{j\theta}$ is the quadratic root of $\gamma/\beta$ and

$$\theta = ang\left(\frac{\gamma}{\beta}\right)/4 + 2k\pi$$

where k = 0, 1, 2, 3 and

$$\theta \in [-\pi, \pi].$$

There are four roots (i.e., quadratic) for the solution represented by Equation 9. According to one example embodiment, Equation 7 is solved for each root and the root that provides the smallest error and smallest angle is selected as the phase angle θ. That selected phase angle may then be used to solve for the interpolation coefficients. The angle of detection of the detector device 22 can then be determined based on those interpolation coefficients.

The angle of detection in such an embodiment includes an azimuth angle determination and an elevation angle determination. The shifted array configuration allows for determining elevation while maintaining azimuth accuracy because it is not necessary to dedicate a channel or channels of a linear array to the elevation measurement, which would effectively shorten the array useable for the azimuth measurement.

Setting a correspondence between the error associated with the interpolation between the detectors and the phase difference between the levels in the elevation dimension allows for simultaneously determining the azimuth and elevation angles using the shifted array configuration. The linear interpolation between the detectors in the array assumes no shift is present. Estimating the elevation measurement includes correcting the error by assuming a model where a shift in elevation is present. A linear model as described above interpolates between adjacent ones of the first detectors 32, for example, at the same time as correcting the shift of the second detector 34 between those first detectors 32.

Another example sensor device configuration is shown in Figure 4. This example includes different spacings between the detectors and some shifted detectors in the array 30'. For such an array configuration, Equation 3 above can be rewritten as:

$$Ac = b(\theta) = \begin{bmatrix} b_1 e^{j\theta} \\ b_2 e^{-j\theta} \\ b_3 \end{bmatrix} \qquad (10)$$

The projector $P^1$ may be partitioned as:

$$P^{\perp} = \begin{bmatrix} P_1 & P_2 & P_5 \\ P_3 & P_4 & P_6 \\ P_7 & P_8 & P_9 \end{bmatrix}$$

and the interpolation error can be represented as

$$\epsilon^2 = \begin{bmatrix} b_1^H e^{-j\theta} & b_2^H e^{j\theta} & b_3^H \end{bmatrix} \begin{bmatrix} P_1 & P_2 & P_5 \\ P_3 & P_4 & P_6 \\ P_7 & P_8 & P_9 \end{bmatrix} \begin{bmatrix} b_1 e^{j\theta} \\ b_2 e^{-j\theta} \\ b_3 \end{bmatrix} \quad (11)$$

$$= b_1^H P_1 b_1 + b_2^H P_3 b_1 e^{j2\theta} + b_3^H P_7 b_1 e^{j\theta} + b_1^H P_2 b_2 e^{-j2\theta} + b_2^H P_4 b_2$$
$$+ b_3^H P_8 b_2 e^{-j\theta} + b_1^H P_5 b_3 e^{-j\theta} + b_2^H P_6 b_3 e^{j\theta} + b_3^H P_9 b_3$$

After taking the partial derivative of the error with respect to θ and setting it to zero, the following is true

$$\frac{\partial \epsilon^2}{\partial \theta} = 2j \cdot e^{j2\theta} b_2^H P_3 b_1 + j \cdot e^{j\theta} b_3^H P_7 b_1 - 2j \cdot e^{-j2\theta} b_1^H P_2 b_2 - j \cdot e^{-j\theta} b_3^H P_8 b_2$$
$$- j \cdot e^{-j\theta} b_1^H P_5 b_3 + j \cdot e^{j\theta} b_2^H P_6 b_3 = 0 \quad (12)$$

Letting $z = e^{j\theta}$ in Equation 12 yields

$$2b_2^H P_3 b_1 \cdot z^4 + (b_3^H P_7 b_1 + b_2^H P_6 b_3) \cdot z^3 - (b_3^H P_8 b_2 + b_1^H P_5 b_3) \cdot z - 2b_1^H P_2 b_2 = 0 \quad (13)$$

Similar to the previous example, quadratic roots can be obtained by solving Equation 13 and θ = ang(z). Each of the four roots are used in Equation 11 and the one that minimizes the error and provides the smallest angle is chosen as the value of θ to solve for the interpolation coefficients. The smallest angle is useful in embodiments where the elevation field of vision is relatively small.

**Claims**

1. A detector device (22), comprising:

    a multiple-dimensional array (30) of detectors including a plurality of first detectors (32) aligned with each other in a first direction and a plurality of second detectors (34) aligned with each other in the first direction, the second detectors (34) being offset relative to the first detectors (32) in a second direction that is different than the first direction; and the second detectors (34) being shifted in position relative to the first detectors (32) in the first direction so that the position of at least one of the second detectors (34) is situated between the positions of two first detectors in the first direction; and
    **characterized by** a processor (40) that determines an interpolation coefficient that compensates for the shift between the first detectors (32) and the second detectors (34) in the first direction, by at least:

        defining a linear relationship that assumes the plurality of first detectors (32) are aligned with the plurality of second detectors (34), i.e. that no shift is present between the first and second detectors in the first direction;
        determining a further relationship between an interpolation error, which is introduced by said shift, and a phase difference associated with said offset;
        determining a value of the phase difference that minimizes the interpolation error; and
        determining the interpolation coefficient from the linear relationships using the phase difference that minimizes the interpolation error, and further **characterized in that** the processor (40) determines an angle of detection of the device (22) based on the interpolation coefficient thereby effectively collapsing the multiple-dimensional array to a uniform, linear array.

2. The detector device (22) of claim 1, wherein the angle of detection comprises a first angle in a first dimension and a second angle in a second dimension that is transverse with the first dimension.

3. The detector device (22) of claim 2, wherein the first angle is an azimuth and the second angle is an elevation.

4. The detector device (22) according to any one of the preceding claims, wherein the interpolation coefficient comprises a plurality of coefficients and a correction factor.

5. The detector device (22) according to any one of the preceding claims, wherein the first direction is perpendicular to the second direction.

6. The detector device (22) according to any one of the preceding claims, wherein the detectors each comprise an antenna.

7. The detector device (22) according to any one of the preceding claims, wherein the detectors detect at least one of RADAR or LIDAR radiation.

8. A method of detecting, comprising detecting with a multiple-dimensional array (30) of detectors including a plurality of first detectors (32) aligned with each other in a first direction and a plurality of second detectors (34) aligned with each other in the first direction, the second detectors (34) being offset relative to the first detectors (32) in a second direction that is different than the first direction; and the second detectors (34) being shifted in position relative to the first detectors (32) in the first direction so that the position of at least one of the second detectors (34) is situated between the positions of two first detectors in the first direction; and determining by a processor (40) an interpolation coefficient that compensates for the shift between the first detectors (32) and the second detectors (34) in the first direction, by at least:

defining a linear relationship that assumes a plurality of first detectors (32) are aligned with a plurality of second detectors (34), i.e. that no shift is present between the first and second detectors in the first direction; determining a further relationship between an interpolation error, which is introduced by said shift, and a phase difference associated with said offset; determining a value of the phase difference that minimizes the interpolation error; and determining an interpolation coefficient from the linear relationships using the phase difference that minimizes the interpolation error and compensates for the offset; and the processor (40) determining an angle of detection of the device (22) using the determined interpolation coefficient thereby effectively collapsing the multiple-dimensional array to a uniform, linear array.

9. The method of claim 8, wherein determining the angle of detection comprises

determining a first angle in a first dimension; and determining a second angle in a second dimension that is transverse with the first dimension.

10. The method according of claim 9, wherein the first angle is an azimuth and the second angle is an elevation.

11. The method according to any one of the claims 8 to 10 , wherein determining the interpolation coefficient comprises determining a plurality of coefficients and a correction factor.

12. The method according to any one of the claims 8 to 11 wherein the first direction is perpendicular to the second direction.

13. The method according to any one of the claims 8 to 12, wherein the detectors each comprise an antenna.

14. The method according to any one of the claims 8-13, wherein the detectors detect at least one of RADAR or LIDAR radiation.

**Patentansprüche**

1. Detektorvorrichtung (22), die umfasst:

ein mehrdimensionales Array (30) von Detektoren, das eine Vielzahl von ersten Detektoren (32), die in einer ersten Richtung miteinander ausgerichtet sind, und eine Vielzahl von zweiten Detektoren (34), die in der ersten Richtung miteinander ausgerichtet sind, enthält, wobei die zweiten Detektoren (34) relativ zu den ersten Detektoren (32) in einer zweiten Richtung versetzt sind, die sich von der ersten Richtung unterscheidet; und wobei die zweiten Detektoren (34) in ihrer Position relativ zu den ersten Detektoren (32) in der ersten Richtung verschoben sind, so dass die Position von mindestens einem der zweiten Detektoren (34) in der ersten Richtung zwischen den Positionen von zwei ersten Detektoren liegt; und

**gekennzeichnet durch** einen Prozessor (40), der einen Interpolationskoeffizienten ermittelt, der die Verschiebung zwischen den ersten Detektoren (32) und den zweiten Detektoren (34) in der ersten Richtung kompensiert, indem er zumindest:

eine lineare Beziehung definiert, die davon ausgeht, dass die Vielzahl von ersten Detektoren (32) mit der Vielzahl von zweiten Detektoren (34) ausgerichtet ist, d. h. dass keine Verschiebung zwischen den ersten und zweiten Detektoren in der ersten Richtung vorhanden ist;
eine weitere Beziehung zwischen einem Interpolationsfehler, der durch die Verschiebung eingeführt wird, und einer Phasendifferenz bestimmt, die dem Versatz zugeordnet ist;
einen Wert der Phasendifferenz bestimmt, der den Interpolationsfehler minimiert; und
den Interpolationskoeffizienten aus den linearen Beziehungen unter Verwendung der Phasendifferenz, der den Interpolationsfehler minimiert, ermittelt, und

ferner **dadurch gekennzeichnet, dass** der Prozessor (40) einen Erfassungswinkel der Vorrichtung (22) auf der Grundlage des Interpolationskoeffizienten bestimmt, wodurch das mehrdimensionale Array effektiv auf ein einheitliches, lineares Array reduziert wird.

2.  Detektorvorrichtung (22) nach Anspruch 1, wobei der Erfassungswinkel einen ersten Winkel in einer ersten Dimension und einen zweiten Winkel in einer zweiten Dimension, die quer zu der ersten Dimension verläuft, umfasst.

3.  Detektorvorrichtung (22) nach Anspruch 2, wobei der erste Winkel ein Azimut und der zweite Winkel ein Höhenwinkel ist.

4.  Detektorvorrichtung (22) nach einem der vorhergehenden Ansprüche, wobei der Interpolationskoeffizient eine Vielzahl von Koeffizienten und einen Korrekturfaktor umfasst.

5.  Detektorvorrichtung (22) nach einem der vorhergehenden Ansprüche, wobei die erste Richtung rechtwinklig zur zweiten Richtung verläuft.

6.  Detektorvorrichtung (22) nach einem der vorhergehenden Ansprüche, wobei die Detektoren jeweils eine Antenne umfassen.

7.  Detektorvorrichtung (22) nach einem der vorhergehenden Ansprüche, wobei die Detektoren eine RADAR-Strahlung und/oder eine LIDAR-Strahlung erfassen.

8.  Verfahren zum Detektieren, umfassend das Detektieren mit einem mehrdimensionalen Array (30) von Detektoren, das eine Vielzahl von ersten Detektoren (32), die in einer ersten Richtung miteinander ausgerichtet sind, und eine Vielzahl von zweiten Detektoren (34), die in der ersten Richtung miteinander ausgerichtet sind, enthält, wobei die zweiten Detektoren (34) relativ zu den ersten Detektoren (32) in einer zweiten Richtung, die sich von der ersten Richtung unterscheidet, versetzt sind; und die zweiten Detektoren (34) in ihrer Position relativ zu den ersten Detektoren (32) in der ersten Richtung verschoben sind, so dass die Position von mindestens einem der zweiten Detektoren (34) in der ersten Richtung zwischen den Positionen von zwei ersten Detektoren liegt; und

Ermitteln eines Interpolationskoeffizienten, der die Verschiebung zwischen den ersten Detektoren (32) und den zweiten Detektoren (34) in der ersten Richtung kompensiert, durch einen Prozessor (40), indem er zumindest:

eine lineare Beziehung definiert, die davon ausgeht, dass eine Vielzahl von ersten Detektoren (32) mit einer Vielzahl von zweiten Detektoren (34) ausgerichtet ist, d.h. dass keine Verschiebung zwischen den ersten und zweiten Detektoren in der ersten Richtung vorhanden ist;
eine weitere Beziehung zwischen einem Interpolationsfehler, der durch die Verschiebung eingeführt wird, und einer Phasendifferenz, die der Verschiebung zugeordnet ist, bestimmt;

EP 3 376 252 B1

einen Wert der Phasendifferenz ermittelt, der den Interpolationsfehler minimiert; und
einen Interpolationskoeffizienten aus den linearen Beziehungen unter Verwendung der Phasendifferenz ermittelt, der den Interpolationsfehler minimiert und den Versatz kompensiert; und der Prozessor (40)

einen Erfassungswinkel der Vorrichtung (22) unter Verwendung des ermittelten Interpolationskoeffizienten bestimmt, wodurch das mehrdimensionale Array effektiv auf ein einheitliches, lineares Array reduziert wird.

9.  Verfahren nach Anspruch 8, wobei das Bestimmen des Erfassungswinkels umfasst

Bestimmen eines ersten Winkels in einer ersten Dimension; und
Bestimmen eines zweiten Winkels in einer zweiten Dimension, die quer zu der ersten Dimension verläuft.

10. Verfahren nach Anspruch 9, wobei der erste Winkel ein Azimut und der zweite Winkel ein Höhenwinkel ist.

11. Verfahren nach einem der Ansprüche 8 bis 10, wobei das Ermitteln des Interpolationskoeffizienten das Bestimmen einer Vielzahl von Koeffizienten und eines Korrekturfaktors umfasst.

12. Verfahren nach einem der Ansprüche 8 bis 11, wobei die erste Richtung rechtwinklig zur zweiten Richtung verläuft.

13. Verfahren nach einem der Ansprüche 8 bis 12, wobei die Detektoren jeweils eine Antenne umfassen.

14. Verfahren nach einem der Ansprüche 8 bis 13, wobei die Detektoren eine RADAR-Strahlung und/oder eine LIDAR-Strahlung erfassen.

## Revendications

1.  Dispositif de détection (22) comprenant :

un réseau multidimensionnel (30) de détecteurs incluant une pluralité de premiers détecteurs (32) alignés les uns avec les autres dans une première direction et une pluralité de seconds détecteurs (34) alignés les uns avec les autres dans la première direction, les seconds détecteurs (34) étant décalés par rapport aux premiers détecteurs (32) dans une seconde direction qui est différente de la première direction ; et
les seconds détecteurs (34) étant décentrés en position par rapport aux premiers détecteurs (32) dans la première direction de sorte que la position d'au moins un des seconds détecteurs (34) est située entre les positions de deux premiers détecteurs dans la première direction ; et
**caractérisé par** un processeur (40) qui détermine un coefficient d'interpolation qui compense le décentrage entre les premiers détecteurs (32) et les seconds détecteurs (34) dans la première direction, au moins en :

définissant une relation linéaire qui suppose que la pluralité de premiers détecteurs (32) sont alignés avec la pluralité de seconds détecteurs (34), c'est-à-dire qu'il n'y a pas de décentrage entre les premiers et les seconds détecteurs dans la première direction ;
déterminant une autre relation entre une erreur d'interpolation, qui est introduite par ledit décentrage, et une différence de phase associée audit décalage ;
déterminant une valeur de la différence de phase qui minimise l'erreur d'interpolation ; et
déterminant le coefficient d'interpolation à partir des relations linéaires en utilisant la différence de phase qui minimise l'erreur d'interpolation, et **caractérisé en outre en ce que** le processeur (40) détermine un angle de détection du dispositif (22) sur la base du coefficient d'interpolation, réduisant ainsi effectivement le réseau multidimensionnel à un réseau linéaire uniforme.

2.  Dispositif de détection (22) selon la revendication 1, dans lequel l'angle de détection comprend un premier angle dans une première dimension et un second angle dans une seconde dimension qui est transversale à la première dimension.

3.  Dispositif de détection (22) selon la revendication 2, dans lequel le premier angle est un azimut et le second angle est une élévation.

4.  Dispositif de détection (22) selon l'une quelconque des revendications précédentes, dans lequel le coefficient d'interpolation comprend une pluralité de coefficients et un facteur de correction.

5. Dispositif de détection (22) selon l'une quelconque des revendications précédentes, dans lequel la première direction est perpendiculaire à la seconde direction.

6. Dispositif de détection (22) selon l'une quelconque des revendications précédentes, dans lequel les détecteurs comprennent chacun une antenne.

7. Dispositif de détection (22) selon l'une quelconque des revendications précédentes, dans lequel les détecteurs détectent au moins l'un d'un rayonnement RADAR ou d'un rayonnement LIDAR.

8. Procédé de détection, consistant à détecter à l'aide d'un réseau multidimensionnel (30) de détecteurs incluant une pluralité de premiers détecteurs (32) alignés les uns avec les autres dans une première direction et une pluralité de seconds détecteurs (34) alignés les uns avec les autres dans la première direction, les seconds détecteurs (34) étant décalés par rapport aux premiers détecteurs (32) dans une seconde direction qui est différente de la première direction ; et les seconds détecteurs (34) étant décentrés en position par rapport aux premiers détecteurs (32) dans la première direction de sorte que la position d'au moins un des seconds détecteurs (34) est située entre les positions de deux premiers détecteurs dans la première direction ; et à déterminer par un processeur (40) un coefficient d'interpolation qui compense le décentrage entre les premiers détecteurs (32) et les seconds détecteurs (34) dans la première direction au moins en :

définissant une relation linéaire qui suppose qu'une pluralité de premiers détecteurs (32) sont alignés avec une pluralité de seconds détecteurs (34), c'est-à-dire qu'il n'y a pas de décentrage entre les premiers et les seconds détecteurs dans la première direction ;
déterminant une autre relation entre une erreur d'interpolation, qui est introduite par ledit décentrage, et une différence de phase associée audit décalage ;
déterminant une valeur de la différence de phase qui minimise l'erreur d'interpolation ; et
déterminant un coefficient d'interpolation à partir des relations linéaires en utilisant la différence de phase qui minimise l'erreur d'interpolation et compense le décalage ; et le processeur (40) déterminant un angle de détection du dispositif (22) en utilisant le coefficient d'interpolation déterminé, réduisant ainsi effectivement le réseau multidimensionnel à un réseau linéaire uniforme.

9. Procédé selon la revendication 8, dans lequel déterminer l'angle de détection consiste à :

déterminer un premier angle dans une première dimension ; et
déterminer un second angle dans une seconde dimension qui est transversale à la première dimension.

10. Procédé selon la revendication 9, dans lequel le premier angle est un azimut et le second angle est une élévation.

11. Procédé selon l'une quelconque des revendications 8 à 10, dans lequel déterminer le coefficient d'interpolation consiste à déterminer une pluralité de coefficients et un facteur de correction.

12. Procédé selon l'une quelconque des revendications 8 à 11, dans lequel la première direction est perpendiculaire à la seconde direction.

13. Procédé selon l'une quelconque des revendications 8 à 12, dans lequel les détecteurs comprennent chacun une antenne.

14. Procédé selon l'une quelconque des revendications 8 à 13, dans lequel les détecteurs détectent au moins l'un d'un rayonnement RADAR ou d'un rayonnement LIDAR.

FIG. 1

FIG. 2

FIG. 4

50

52

CONFIGURE LINEAR RELATIONSHIP THAT ASSUMES THE
FIRST DETECTORS ARE ALIGNED WITH THE SECOND DETECTORS

54

DETERMINE RELATIONSHIP BETWEEN INTERPOLATION ERROR
AND PHASE DIFFERENCE ASSOCIATED WITH OFFSET
BETWEEN FIRST AND SECOND DETECTORS

56

DETERMINE VALUE OF PHASE DIFFERENCE THAT MINIMIZES
THE INTERPOLATION ERROR

58

DETERMINE INTERPOLATION COEFFICIENTS FROM THE LINEAR
RELATIONSHIPS USING THE PHASE DIFFERENCE THAT
MINIMIZES THE ERROR

60

DETERMINE ANGLE OF DETECTIONIN BASED ON
THE INTERPOLATION COEFFICIENTS

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160104946 A1
- US 2013053467 A1